# EUROPÄISCHE PATENTSCHRIFT

(11) **EP 2 025 962 B1**
(45) Veröffentlichungstag und Bekanntmachung des Hinweises auf die Patenterteilung: **20.03.2013**
(21) Anmeldenummer: 08013076.8
(22) Anmeldetag: 21.07.2008
(51) Int. Cl.: F16D 25/08

(54) **Nehmerzylinder**
Slave cylinder
Cylindre récepteur

(30) Priorität: 10.08.2007 DE 102007037843
(43) Veröffentlichungstag der Anmeldung: 18.02.2009
(73) Patentinhaber: Schaeffler Technologies AG & Co. KG, 91074 Herzogenaurach (DE)
(72) Erfinder: Sainton, Denis, 45520 Chevilly (FR)

(56) Entgegenhaltungen:
- WO-A1-2006/136132
- DE-C2- 19 716 473
- JP-A- 4 307 124
- US-A1- 2004 154 895

## Beschreibung

Die Erfindung betrifft einen Zentralausrücker für Kraftfahrzeuge, mit den Merkmalen des Oberbegriffs des Anspruchs 1.

Nehmerzylinder, die Teil einer hydraulischen Strecke zur Betätigung einer Kupplung darstellen, bestehen im Wesentlichen aus einem Gehäuse mit einem darin axial beweglich angeordneten Kolben, der zur Realisierung einer Druckübertragung gegenüber dem umliegenden Gehäuse abgedichtet ist. Diese Abdichtung wird dabei einerseits durch eine am Kolben und damit bewegliche bzw. dynamische Dichtung und andererseits mittels einer außerhalb des Kolbens, nämlich im Gehäuse angeordneten statischen Dichtung realisiert. Ist dieser Nehmerzylinder konzentrisch um eine Getriebeeingangswelle angeordnet, ist der im Nehmerzylinder geführte Kolben für den Durchgang dieser Getriebeeingangswelle als Ringkolben ausgebildet. Derartige Nehmerzylinder werden heutzutage aufgrund ihrer zur Kupplungs- bzw. Getriebeeingangswelle konzentrischen Anordnung auch als Zentralausrücker bezeichnet.

Zur Vermeidung des Eintragens von Schmutz aus der Umgebung bei der Bewegung des Kolbens bzw. zur Abdichtung des Ringkolbens und damit der dynamischen Dichtung des Zentralausrückers, dient bekanntermaßen die im Gehäuse angeordnete statische Dichtung. Allerdings kommt es trotz dieser Dichtung noch durch Schmutzeintragungen zu Undichtigkeiten zwischen Kolben und Gehäuse. Deshalb werden zur Verbesserung der Abdichtung des Ringkolbens unterschiedliche Maßnahmen vorgeschlagen. So wird zum Beispiel in der DE 197 16 473 C2 eine Lösung aufgezeigt, in der eine zusätzliche als Staubhülse fungierende Hülse zwischen dem Ringkolben und einem axialen Fortsatz des Gehäuses angeordnet ist, deren Form so gestaltet ist, dass sie unter Belastung in radialer Richtung nach außen eine Dichtwirkung erzielt. Nachteilig an dieser Hülse ist, dass sie als zylindrisches Bauteil ausgeführt ist und daher eine relativ große Andruckkraft in radialer Richtung nach außen aufgebracht werden muss, um die gewünschte Dichtwirkung zu erzielen. Daher ist für diese Bauweise eine sehr steife Staubhülse notwendig, wobei eine entsprechend genaue Bearbeitung der abzudichtenden Flächen notwendig ist. In die Dichtflächen eindringender Staub oder sonstiger Schmutz führt dabei unweigerlich zu einer Verringerung der Dichtwirkung.

WO 2004/0154895 offenbart einen Zentralausrücker nach dem Oberbegriff des Anspruchs 1.

Die Aufgabe der vorliegenden Erfindung besteht deshalb darin, einen Zentralausrücker mit einer einfachen und kostengünstig herstellbaren Abdichtung des Zwischenraumes zwischen den bewegbaren Bauteilen gegenüber der Umgebung vorzuschlagen, wobei die Abdichtung den Bauraum des Zentralausrückers nicht vergrößern soll und durch die eine auf Dauer zuverlässige Dichtwirkung des Kolbens gewährleistet wird.

Diese Aufgabe wird mit einem Zentralausrücker mit den Merkmalen des Anspruchs 1 gelöst.

Vorteilhafte Ausgestaltungen der Erfindung ergeben sich aus den Merkmalen der Unteransprüche.

Die Erfindung wird nachfolgend anhand eines Ausführungsbeispiels und zugehöriger Zeichnungen näher erläutert.

### Es zeigen:

- Figur 1: einen Schnitt durch einen erfindungsgemäßen Zentralausrücker, in dem sich der Kolben in einer ersten Endstellung befindet,
- Figur 2: einen Schnitt gemäß Figur 1, wobei sich der Kolben in einer Mittelstellung befindet,
- Figur 3: einen Schnitt gemäß Figur 1, wobei sich der Kolben in einer zweiten Endstellung befindet.

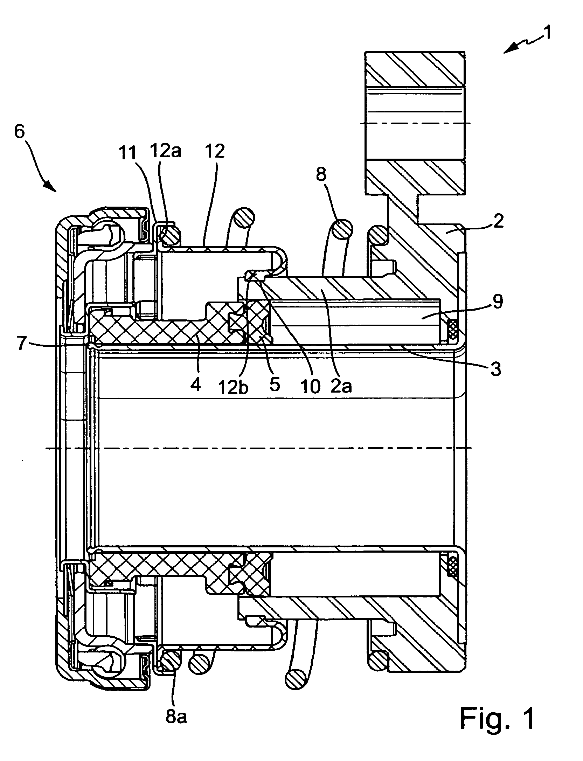

Die Figuren 1 bis 3 zeigen einen Zentralausrücker 1 in drei unterschiedlichen Kolbenstellungen. Zur Beschreibung der Figuren werden daher die gleichen Bezugszeichen verwendet.

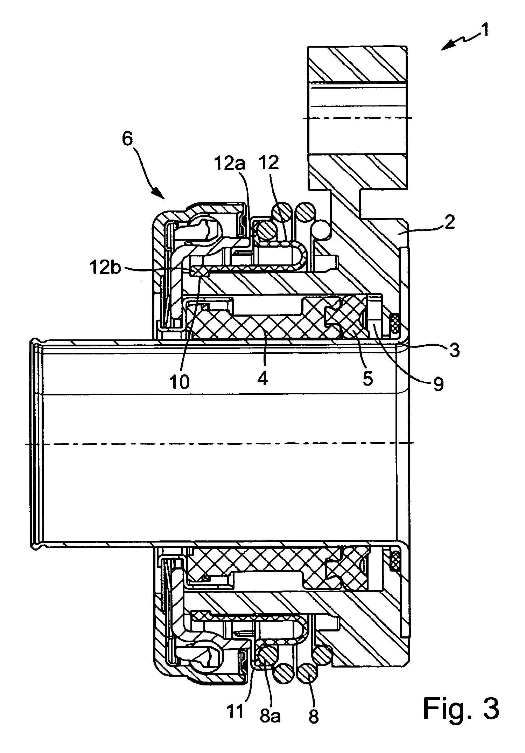

Die Figuren 1 und 3 zeigen einen Zentralausrücker 1 in jeweils einer Endstellung des Kolbens 4, wobei in Figur 1 der Kolben in einer ersten, vollständig ausgefahrenen Stellung, also einer ersten Endstellung, dargestellt ist. In Figur 3 ist die zweite Endstellung des Kolbens 4 aufgezeigt, in der er vollständig ausgefahren ist.

Der in diesen drei Figuren dargestellte Zentralausrücker 1 umfasst im Wesentlichen eine Führungshülse 3, ein Gehäuse 2 mit einer axialen Ausdehnung 2a, sowie einen in den koaxialen Zwischenraum zwischen Führungshülse und Gehäuse 2 eingesetzten Kolben 4. Das Gehäuse 2 und die Führungshülse 3 begrenzen einen im Wesentlichen zylindertorusförmigen Druckarm 9, in dem der Kolben gegenüber der Umgebung abgedichtet hydraulisch axial bewegbar ist. Am Kolben 4 ist endseitig ein Dichtelement 5 in Form einer Nutringdichtung angebracht. Das andere Ende des Kolbens 4 ist über einen topfförmigen Lagerring 11 mit einem Ausrücklager 6 verbunden. Eine endseitig an der Führungshülse 3 angeformte Wulst dient als vorderer Anschlag 7 für den Weg des Kolbens 4. Die Wegbegrenzung in umgekehrter Richtung des Kolbens 4 erfolgt dadurch, dass der Lagerring 11 des Ausrücklagers 6 mit seinem Boden an der ringförmigen Stirnfläche der axialen Ausdehnung 2a des Gehäuses 2 anschlägt. Zwischen dem Kolben 4 und der axialen Ausdehnung 2a des Gehäuses 2 ist ein Energiespeicher in Form einer Druckfeder 8 vorgesehen, die zur Erzeugung einer Andruckkraft auf das Ausrücklager 6 dient. Die Führungshülse 3, die axiale Ausdehnung 2a des Gehäuses 2 sowie der Kolben 4 begrenzen den Druckraum 9, der mit einem nicht dargestellten Hydraulikanschluss in Verbindung steht und der über diesen mit Druck beaufschlagbar ist.

Die Druckfeder 8 stützt sich endseitig einerseits am Gehäuse 2 und andererseits mit ihrer Endwindung 8a am kolbenseitigen Lagerring 11 ab, der im vorliegenden Ausführungsbeispiel direkt mit dem Innenring des Ausrücklagers 6 zusammenwirkt. Zur Abdeckung bzw. Abdichtung des Zwischenraumes zwischen Druckfeder 8 und axialer Ausdehnung 2a des Gehäuses 2 ist ein schlauch- bzw. hülsenförmiger Schmutzschutz 12 vorgesehen. Dieser wird mit seinem vorderen Bereich 12a mit seinem radial nach außen abgewinkelten Ende zwischen dem Lagerring 11 und der Endwindung 8a der Druckfeder 8 eingeklemmt, wobei sein hinterer Endbereich 12b in einer in der axialen Ausdehnung 2a des Gehäuses 2 vorgesehenen Nut 10 aufgenommen wird. Dieser vorzugsweise als Schlauchmanschette ausgebildete Schmutzschutz 12 kann dabei vorzugsweise aus Gummi hergestellt werden. Ebenso kann er aus dünnem flexiblen Kunststoff bestehen, so dass eine Schlauchmembran gebildet werden kann.

Bei der axialen Bewegung des Kolbens 4 und damit auch der des Ausrücklagers 6 werden, wie in den Figuren 1 bis 3 dargestellt, die beiden Endbereiche 12a und 12b des Schmutzschutzes 12 relativ zueinander bewegt.

In Figur 1, wo sich der Kolben 4 in seiner vollständig ausgefahrenen Stellung, das heißt in seiner ersten Endstellung befindet, weist der Schmutzschutz 12 seine größte axiale Ausdehnung auf, wobei der hintere Endbereich 12b zur Zugentlastung und zum Ausgleich der Durchmesserunterschiede zwischen dem Innendurchmesser der Druckfeder 8 und dem Außendurchmesser der axialen Ausdehnung 2a des Gehäuses 2 bogenförmig in der Nut 10 aufgenommen wird.

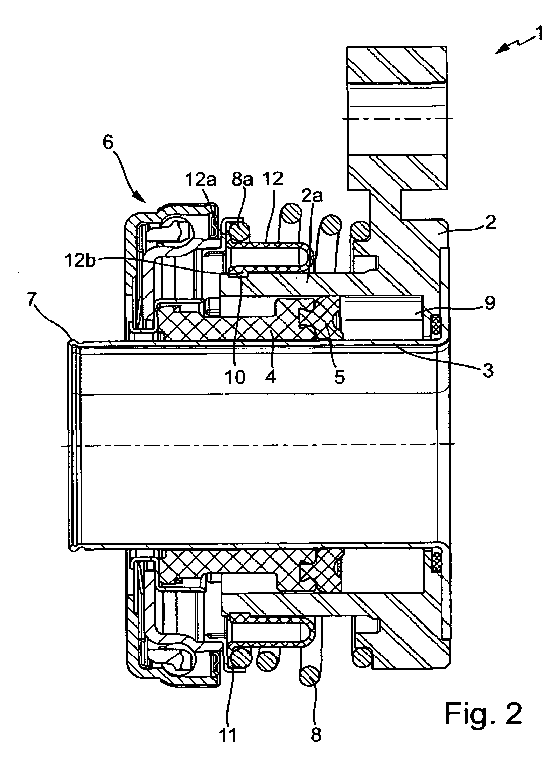

Aus Figur 2 ist ersichtlich, dass die beiden Endbereiche 12a und 12b des Schmutzschutzes 12 in einer bevorzugten Stellung, wie der hier dargestellten Mittelstellung des Kolbens 4, konzentrisch zueinander beabstandet übereinander liegen.

In Figur 3, in der der Kolben 4 seine zweite Endstellung einnimmt, in der er vollständig in das Gehäuse 2 eingefahren ist, ist es aufgrund des elastischen Materials des Schmutzschutzes 12 möglich, dass in dieser Stellung der vordere Endbereich 12a des Schmutzschutzes 12 in axialer Richtung hinter dessen hinterem Endbereich 12b zu liegen kommt, so dass in dieser Stellung der Schmutzschutz 12 mehrlagig ist und damit die Abdichtungswirkung noch erhöht wird.

Aus den Figuren 1 bis 3 ist erkennbar, dass über die gesamte Wegstrecke des Kolbens 4 dieser nach außen hin vor Schmutz geschützt ist. Dadurch ist gewährleistet, dass zwischen dem Innendurchmesser der axialen Ausdehnung 2a des Gehäuses 2 und dem Außendurchmesser des Kolbens 4 keine Schmutzpartikel eindringen und sich schließlich bei der Bewegung des Kolbens 4 zwischen dem Dichtelement 5 und dem Innendurchmesser der axialen Ausdehnung 2a des Gehäuses 2 ansammeln können, der, wie bereits erwähnt, dann über das als Nutringdichtung ausgebildete Dichtelement 5 in den mit Hydraulikfluid gefüllten Druckraum 9 gelangen würde. Dadurch würde einerseits das Fluid verunreinigt und durch die Bildung eines Spaltes zwischen Nutringdichtung 5 und axialer Ausdehnung 2a würde es möglich, dass Hydraulikfluid aus dem Zentralausrücker 1 austreten kann.

Durch diese erfindungsgemäße Lösung wird somit der Abdichtung des Druckraumes 9 durch die Nutringdichtung 5 eine weitere Abdichtung zur Umgebung hin anstelle einer statischen Dichtung in Form eines Schmutzschutzes 12 überlagert, wodurch die Nutringdichtung 5 zusätzlich geschützt wird, und eine statische Dichtung im Gehäuse entfallen kann. Auf diese Weise kann die Lebensdauer des Zentralausrückers 1 erhöht werden.

### Bezugszeichenliste

- 1: Zentralausrücker
- 2: Gehäuse
- 2a: axiale Ausdehnung des Gehäuses
- 3: Führungshülse
- 4: Kolben
- 5: Dichtelement / Nutringdichtung / dynamische Dichtung
- 6: Ausrücklager
- 7: Anschlag
- 8: Energiespeicher / Druckfeder
- 8a: Endwindung
- 9: Druckraum
- 10: Nut
- 11: Lagerring
- 12: Schmutzschutz / Schlauchmanschette
- 12a: vorderer Endbereich
- 12b: hinterer Endbereich

## Patentansprüche

1. Zentralausrücker (1) für Kraftfahrzeuge, mit einem eine axiale Ausdehnung (2a) aufweisenden Gehäuse (2) und einem darin axial bewegbar angeordneten Kolben (4), der über einen mit einem Ausrücklager (6) verbundenen Lagerring (11) mit dem Ausrücklager (6) in Wirkverbindung steht und dieses Ausrücklager (6) mittels eines sich am Gehäuse (2) abstützenden Energiespeichers (8) eine axiale Vorspannung erhält, wobei der Innendurchmesser des Lagerrings (11) größer als der Außendurchmesser der axialen Ausdehnung (2a) ist und sich eine Endwindung (8a) des Energiespeichers (8) am Lagerring (11) abstützt, wobei zwischen dem Innendurchmessers des Lagerrings (11) und dem Außendurchmesser der axialen Ausdehnung (2a) ein Schmutzschutz (12) angeordnet ist, **dadurch gekennzeichnet, dass** der Schmutzschutz (12) im Zwischenraum zwischen dem Energiespeicher (8) und der axialen Ausdehnung (2a) angeordnet ist.

2. Zentralausrücker (1) nach Anspruch 1, **dadurch gekennzeichnet, dass** der Schmutzschutz (12) als Schlauchmanschette ausgebildet ist.

3. Zentralausrücker (1) nach Anspruch 1 und 2, **dadurch gekennzeichnet, dass** der Schmutzschutz (12) einen vorderen Endbereich (12a) und einen hinteren Endbereich (12b) aufweist.

4. Zentralausrücker (1) nach Anspruch 3, **dadurch gekennzeichnet, dass** der vordere Endbereich (12a) des Schmutzschutzes (12) zwischen der Endwindung (8a) des Energiespeichers (8) und dem Lagerring (11) eingeklemmt ist und sein hinterer Endbereich (12) in einer in der axialen Ausdehnung (2a) vorgesehenen, umlaufenden Nut (10) aufgenommen wird.

5. Zentralausrücker (1) nach Anspruch 2, **dadurch gekennzeichnet, dass** der Schmutzschutz (12) aus einem flexiblen und reißfesten Material besteht.

6. Zentralausrücker (1) nach Anspruch 1, **dadurch gekennzeichnet, dass** der Schmutzschutz (12) als Schlauchmembran ausgeführt ist.

## Claims

1. Central clutch operator (1) for motor vehicles, having a housing (2), which has an axial extension (2a), and a piston (4) which is arranged axially movably therein and is operatively connected, via a bearing ring (11) which is connected to a disengagement bearing (6), to the disengagement bearing (6), and the said disengagement bearing (6) is given an axial prestress by means of an energy store (8) which is supported on the housing (2), the internal diameter of the bearing ring (11) being greater than the external diameter of the axial extension (2a), and an end winding (8a) of the energy store (8) being supported on the bearing ring (11), a dirt protection means (12) being arranged between the internal diameter of the bearing ring (11) and the external diameter of the axial extension (2a), **characterized in that** the dirt protection means (12) is arranged in the intermediate space between the energy store (8) and the axial extension (2a).

2. Central clutch operator (1) according to Claim 1, **characterized in that** the dirt protection means (12) is configured as a hose sleeve.

3. Central clutch operator (1) according to Claim 1 or 2, **characterized in that** the dirt protection means (12) has a front end region (12a) and a rear end region (12b).

4. Central clutch operator (1) according to Claim 3, **characterized in that** the front end region (12a) of the dirt protection means (12) is clamped in between the end winding (8a) of the energy store (8) and the bearing ring (11), and its rear end region (12) is received in a circumferential groove (10) which is provided in the axial extension (2a).

5. Central clutch operator (1) according to Claim 2, **characterized in that** the dirt protection means (12) is composed of a flexible and tear-resistant material.

6. Central clutch operator (1) according to Claim 1, **characterized in that** the dirt protection means (12) is embodied as a tubular diaphragm.

## Revendications

1. Dispositif de débrayage central (1) pour véhicules automobiles, comprenant un boîtier (2) présentant une extension axiale (2a) et un piston (4) disposé de manière déplaçable axialement dans celui-ci, qui est en liaison fonctionnelle avec un palier de débrayage (6) par le biais d'une bague de palier (11) connectée au palier de débrayage (6) et ce palier de débrayage (6) subissant une précontrainte axiale au moyen d'un accumulateur d'énergie (8) s'appuyant sur le boîtier (2), le diamètre intérieur de la bague de palier (11) étant supérieur au diamètre extérieur de l'extension axiale (2a) et un enroulement terminal (8a) de l'accumulateur d'énergie (8) s'appuyant sur la bague de palier (11), une protection anti-poussière (12) étant disposée entre le diamètre intérieur de la bague de palier (11) et le diamètre extérieur de l'extension axiale (2a), **caractérisé en ce que** la protection anti-poussière (12) est disposée dans l'espace intermédiaire entre l'accumulateur d'énergie (8) et l'extension axiale (2a).

2. Dispositif de débrayage central (1) selon la revendication 1, **caractérisé en ce que** la protection anti-poussière (12) est réalisée sous forme de manchon tubulaire.

3. Dispositif de débrayage central (1) selon les revendications 1 et 2, **caractérisé en ce que** la protection anti-poussière (12) présente une région d'extrémité avant (12a) et une région d'extrémité arrière (12b).

4. Dispositif de débrayage central (1) selon la revendication 3, **caractérisé en ce que** la région d'extrémité avant (12a) de la protection anti-poussière (12) est serrée entre l'enroulement terminal (8a) de l'accumulateur d'énergie (8) et la bague de palier (11) et sa région d'extrémité arrière (12) est reçue dans une rainure périphérique (10) prévue dans l'extension axiale (2a).

5. Dispositif de débrayage central (1) selon la revendication 2, **caractérisé en ce que** la protection anti-poussière (12) se compose d'un matériau flexible et résistant aux déchirures.

6. Dispositif de débrayage central (1) selon la revendication 1, **caractérisé en ce que** la protection anti-poussière (12) est réalisée sous forme de membrane tubulaire.
